# EUROPÄISCHE PATENTSCHRIFT

(11) **EP 1 074 407 B1**
(45) Veröffentlichungstag und Bekanntmachung des Hinweises auf die Patenterteilung: **18.06.2008**
(21) Anmeldenummer: 00114265.2
(22) Anmeldetag: 04.07.2000
(51) Int. Cl.: B60G 15/06, B60G 3/24, B60G 3/04

(54) **Einzelradaufhängung für nichtgelenkte Räder eines Kraftfahrzeuges**
Independent wheel suspension for non-steerable wheels of a motor vehicle
Suspension de roue indépendante pour roues non directrices de véhicule automobile

(30) Priorität: 31.07.1999 DE 19936173
(43) Veröffentlichungstag der Anmeldung: 07.02.2001
(73) Patentinhaber: Bayerische Motoren Werke Aktiengesellschaft, 80809 München (DE)
(72) Erfinder: Boedrich, Harald, 80993 München (DE)

(56) Entgegenhaltungen:
- EP-A- 0 934 839
- DE-A- 3 928 134
- DE-A- 4 204 498
- FR-A- 2 667 827
- US-A- 2 643 109
- US-A- 3 727 940
- US-A- 3 751 025
- US-A- 3 773 346
- US-A- 4 145 036
- US-A- 4 561 640
- US-A- 5 823 552

## Beschreibung

Die Erfindung betrifft eine Einzelradaufhängung für nichtgelenkte Räder eines Kraftfahrzeuges gemäß dem Oberbegriff des Anspruchs 1.

Es ist bereits bekannt, bei einer Einzelradaufhängung eine Tragfeder und einen Dämpfer zu verwenden, wobei sich der Dämpfer zwischen einem karosseriefesten Stützlager und einem Lenker der Einzelradaufhängung oder einem Radträger befindet. Die Feder ist über den Dämpfer gestülpt, wobei der Innendurchmesser der Feder so ausgelegt ist, daß der Dämpfer beim Durchfedern die Innenseite der Feder nicht berührt.

Bei der Verwendung eines Zweirohrdämpfers wird vorteilhafterweise gegenüber einem Einrohrdämpfer durch die geringe Baulänge des Zweirohrdämpfer weniger Bauraum benötigt. Die beim Zweirohrdämpfer am oberen Ende des Dämpfers angeordnete Feder benötigt jedoch einen entsprechenden Durchmesser und damit mehr Bauraum in Fahrzeugquerrichtung. Entsprechend sind im Kofferraum Dome oder Ausbuchtungen ausgebildet, die die Durchladebreite des Kraftfahrzeugkofferraums einschränken.

Aus der DE 39 28 134 A1 ist eine bauraumoptimierte Feder-Dämpfer-Anordnung bekannt, wonach die sog. Federteller zumindest teilweise innerhalb der Radfelge liegen. Ebenfalls im Hinblick auf eine Optimierung des benötigten Bauraums ist aus der FR-A-2 667 827 eine Tragfeder mit elliptischer oder ovaler Durchgangsöffnung bekannt.

Eine weitere bzw. zusätzliche Maßnahme zur Bauraum-Optimierung an einer Einzelradaufhängung für nichtgelenkte Räder eines Kraftfahrzeuges aufzuzeigen, bei der also die Durchladebreite des Kraftfahrzeug-Kofferraumes erhöht ist, ist Aufgabe der vorliegenden Erfindung.

Diese Aufgabe wird durch die Merkmale des Anspruchs 1 gelöst.

Durch die erfindungsgemäße Anpassung der Form des durch die Feder begrenzten Raumes an den Platzbedarf des Dämpfers beim Durchfedern und eines Abstandes der erfindungsgemäßen Feder zu den die Feder umgebenden Bauteilen, wird die Größe der Feder so minimiert, daß entsprechend der für die Feder erforderliche Bauraum geringer ist. So kann in einer vorteilhaften Ausführungsform, bei der der erfindungsgemäße Feder-Dämpfer bei einer angetriebenen Achse neben der Abtriebswelle angeordnet ist, der Dämpfer derartig kinematisch eingebunden sein, dass seine Hauptschwenkrichtung beim Durchfedern ungefähr parallel zur Abtriebswelle oder deren Bauteilen, wie beispielsweise eine Elastomermanschette, verläuft.

Ferner weist die erfindungsgemäße Feder in der Draufsicht eine elliptische Form auf. Damit kann der Dämpfer um den Betrag näher an der Abtriebswelle positioniert werden, der sich aus der Differenz zwischen der kleinen Ellipsenhalbachse und der großen Ellipsenhalbachse ergibt.

Im übrigen kann die Hauptschwenkrichtung des Dämpfers im wesentlichen in Fahrzeugquerrichtung ausgelegt sein, so dass die erfindungsgemäße Feder in Fahrzeuglängsrichtung relativ wenig Bauraum einnimmt. Von Vorteil ist ferner, wenn die erfindungsgemäße Feder konus- oder kegelförmig ausgebildet ist.

Die erfindungsgemäße Feder ist vorzugsweise so am unteren Ende des Stoßdämpfers angeordnet, daß sich der kleinere Querschnitt der Feder am unteren Ende des Stoßdämpfers befindet.

Vorteilhafterweise wird ein gleichmäßiges Biege- oder Bauchverhalten und/oder eine gleichmäßige Spannungsverteilung der erfindungsgemäßen Feder dadurch erreicht, daß der Drahtdurchmesser der Feder sowie die Steigung der Feder an den betreffenden Bereichen der Feder so ausgebildet sind, daß die erfindungsgemäße Feder zumindest annähernd eine gleichmäßige Steifigkeit in den erforderlichen Richtungen aufweist.

Durch die minimierte Größe der erfindungsgemäßen Feder sowie die Anordnung der Feder am unteren Ende des Dämpfers wird, bei einer Anordnung des erfindungsgemäßen Feder-Dämpfers unterhalb des Kofferraumbodens eines Kraftfahrzeuges, eine Vergrößerung der Durchladebreite des Kraftfahrzeug-Kofferraumes erreicht. Die Verbreiterung beträgt für eine Seite beispielsweise maximal den vierfachen Wert, der sich aus der Summe des Federdrahtdurchmesser und des Sicherheitsabstandes zwischen der Feder und dem Dämpfer ergibt. In einer anderen Berechnungsart erhöht sich die Durchladebreite um den doppelten Wert aus der Differenz zwischen Federinnendurchmesser inklusive Sicherheitsabstand und dem Dämpferdurchmesser.

Durch die erfindungsgemäße Einzelradaufhängung entsteht ein kompakteres Achspackage mit einem entsprechend geringeren Bauraumbedarf und in Abhängigkeit von der Kinematik auch ein größeres Dämpfer-Übersetzungsverhältnis, da das untere Ende des Dämpfer näher zum Radträger eines Kraftfahrzeug-Rades angeordnet werden kann. Die erfindungsgemäße Bauweise bedingt durch die maximierte Dämpferübersetzung geringere Kräfte, die in der erfindungsgemäßen Einzelradaufhängung wirken, so daß sich bessere Komforteigenschaften ergeben.

Ausführungsformen der Erfindung werden nachstehend anhand der Zeichnungen beispielshalber beschrieben. Dabei zeigen:
- Fig. 1: eine Ansicht von hinten auf eine teilweise dargestellte Einzelradaufhängung,
- Fig. 2: eine Ansicht von oben auf die in der Fig. 1 gezeigte Einzelradaufhängung,
- Fig. 3: eine perspektivische Darstellung der in den Fig. 1 und 2 gezeigten Einzelradaufhängung und
- Fig. 4: eine Seitenansicht eines Federdämpfer, der in den Fig. 1 bis 3 gezeigten Einzelradaufhängung.

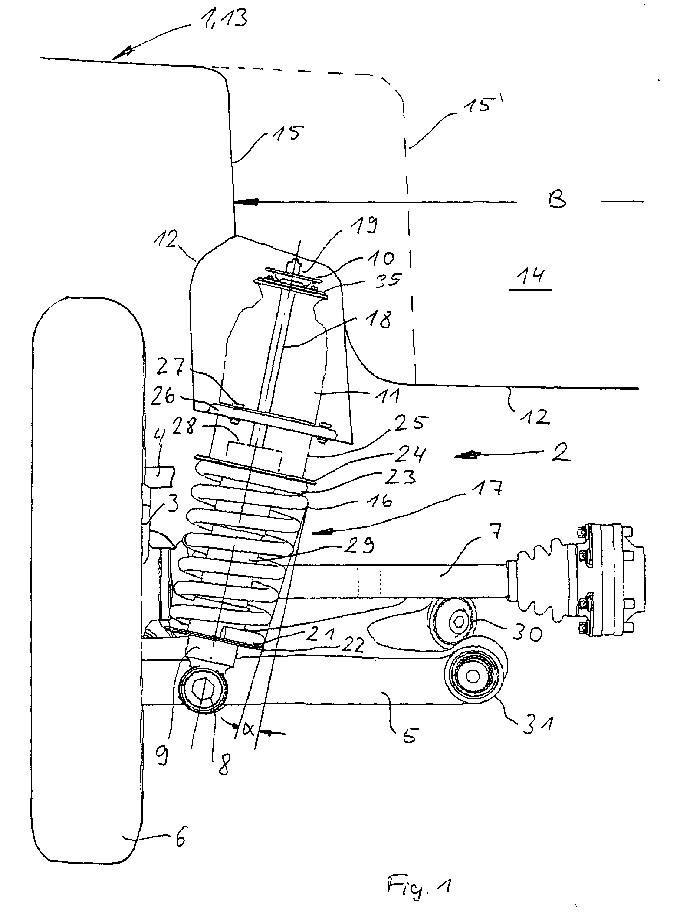

Die Fig. 1 zeigt eine Einzelradaufhängung 2 eines Kraftfahrzeuges 1. An einem Radträger 3 sind ein nur teilweise dargestellter oberer Querlenker 4 und ein als Schwinge ausgebildeter unterer Lenker 5 angelenkt. Der Radträger 3 ist in einem Rad 6 angeordnet. Ferner führt eine Abtriebswelle 7 durch den Radträger 3 zum Rad 6. An dem unteren Lenker 5 stützt sich ein unteres Ende 8 eines Stoßdämpfers 9 ab. Ein oberes Ende 10 des Stoßdämpfers 9 ist über ein Befestigungsbauteil 11 an einem Unterboden 12 einer Karosserie 13 des Kraftfahrzeuges 1 befestigt. Oberhalb des Unterbodens 12 ist ein Kofferraum 14 des Kraftfahrzeuges 1 ausgebildet. In strichlierten Linien ist eine Seitenwand 15 des Kofferraumes 14 in der Fig. 1 eingezeichnet, die sich bei der Verwendung eines herkömmlichen Feder-Dämpfers 17 bei der Anlenkung am Radträger 3 oberhalb der Abtriebswelle 7 ergibt. Bei der Verwendung eines aus dem Stoßdämpfer 9 und einer daran angeordneten Feder 16 bestehenden Feder-Dämpfers 17 und dessen Anlenkung am Lenker 5 kann die Seitenwand 15 weiter nach außen verlegt werden, so daß sich eine größere Durchladebreite B ergibt.

In der gezeigten Ausführungsform ist die Feder 16 zwischen dem unteren Ende 8 des Stoßdämpfers 9 und unterhalb des Befestigungsbauteils 11 angeordnet. Die Feder 16 ist kegelförmig ausgebildet und weist einen Winkel α gegenüber einer zylindrischen Ausbildung der Feder auf, wobei der Winkel α bei 2° ≤ α ≤ 10° liegt.

In dem Stoßdämpfer 9 ist eine Kolbenstange 18 geführt, die mit ihrem oberen Ende 19 am karosserieseitigen Ende 20 des Befestigungsbauteils 11 angeordnet ist. Die Feder 16 stützt sich mit ihrem unteren Ende 21 an einem Teller 22 ab, der am unteren Ende 8 des Stoßdämpfers 9 befestigt ist. Wie aus der Fig. 1 hervorgeht, ist der Teller 22 oberhalb des Querlenkers 5 angeordnet. Ein oberes Ende 23 der Feder 16 stützt sich an einem mit einem Flansch 24 versehenen Stützring 25 ab. Das Befestigungsbauteil 11 ist mit dem Flansch 26 verschweißt. Der Flansch 26 und der Stützring 25 bestehen aus einem Teil. Die Schrauben 27 dienen der Verbindung von Stützring 25 und Karosserie 13.

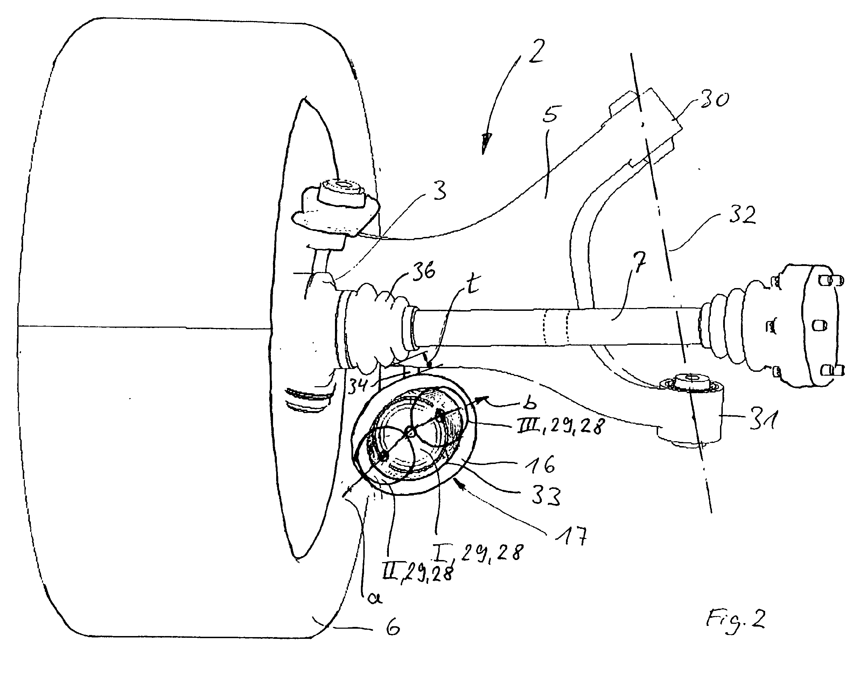

In der Fig. 2 ist am Feder-Dämpfer 17 das Befestigungsbauteil 11 sowie der daran befestigte Stützring 25 weggelassen worden. In der Draufsicht auf ein oberes Ende 28 eines Dämpferrohres 29 des Stoßdämpfers 9 sind drei Stellungen I, II und III des Stoßdämpfers 9 erkennbar.

In der mittleren Stellung I befindet sich der Feder-Dämpfer 17 in einer neutralen Stellung, beispielsweise bei einem Federweg x₀ = 0 mm. In der zum Rad 6 geneigten Stellung II des oberen Endes 28 des Dämpferrohres 29 befindet sich der Feder-Dämpfer 17 im ausgefederten Zustand mit einem Federweg xₘₐₓ = ca. - 100 bis 120 mm. In der Stellung III befindet sich der Feder-Dämpfer 17 im eingefederten Zustand mit einem Federweg xₘᵢₙ =ca. + 100 mm.

Durch Pfeile a und b sind in der Fig. 2 die Schwenkrichtungen beim Aus- und Einfedern des Feder-Dämpfers 17 bezüglich einer durch die beiden Gelenke 30 und 31 des unteren Querlenkers 5 gebildeten Drehachse 32 dargestellt.

Aus der Fig. 2 ist ferner ersichtlich, daß die Feder 16 eine ovale oder elliptische Durchgangsöffnung 33 aufweist, die sich zum einen aus dem für die Schwenkbewegung des Dämpferrohres 29 beim Aus- und Einfedern zwischen den Stellungen II und III und zum anderen durch einen erforderlichen Abstand t zu Bauteilen 36, beispielsweise einer Manschette, der Abtriebswelle 7 ergibt. Der Abstand t ist abhängig von der Schwenkbewegung des Dämpferrohres 29 in Richtung der Abtriebswelle 7 und beträgt mindestens t = 10 bis 20 mm.

Aus der Fig. 2 ist ferner die Befestigung des unteren Endes 8 des Stoßdämpfers 9 über einen Bolzen 34 oder dergleichen am unteren Lenker 5 ersichtlich. In einer anderen Ausführungsform ist das untere Ende 8 des Stoßdämpfers 9 so an dem unteren Lenker 5 angelenkt, daß die von dem Feder-Dämpfer 17 auf den unteren Lenker 5 übertragenen Kräfte kein Moment auf den unteren Lenker 5, d. h. keine Vertikalkraft auf das vordere, achsträgerseitige Gummilager, ausüben.

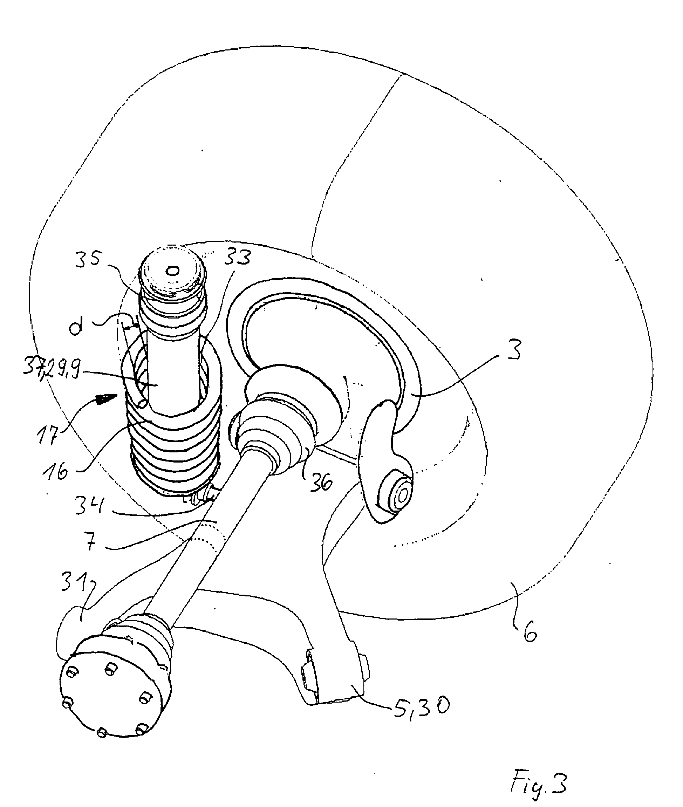

In der Fig. 3 ist ebenfalls wie in der Fig. 2 das obere Befestigungsbauteil 11 sowie der Stützring 25 weggelassen worden, damit die an die Schwenkbewegung des Feder-Dämpfers 17 und an den zur Verfügung stehenden Bauraum zu den Bauteilen 4, 5, 7 der Einzelradaufhängung 2 angepaßte Bauform der Feder 16 erkennbar ist. Die Feder 16 weist ebenfalls einen Sicherheitsabstand d zur Hüllgeometrie des Dämpferrohrs 29 bzw. eines Schutzrohres 37 des Stoßdämpfers 9 auf, wobei der Abstand d = ca. 5 bis 20 mm beträgt.

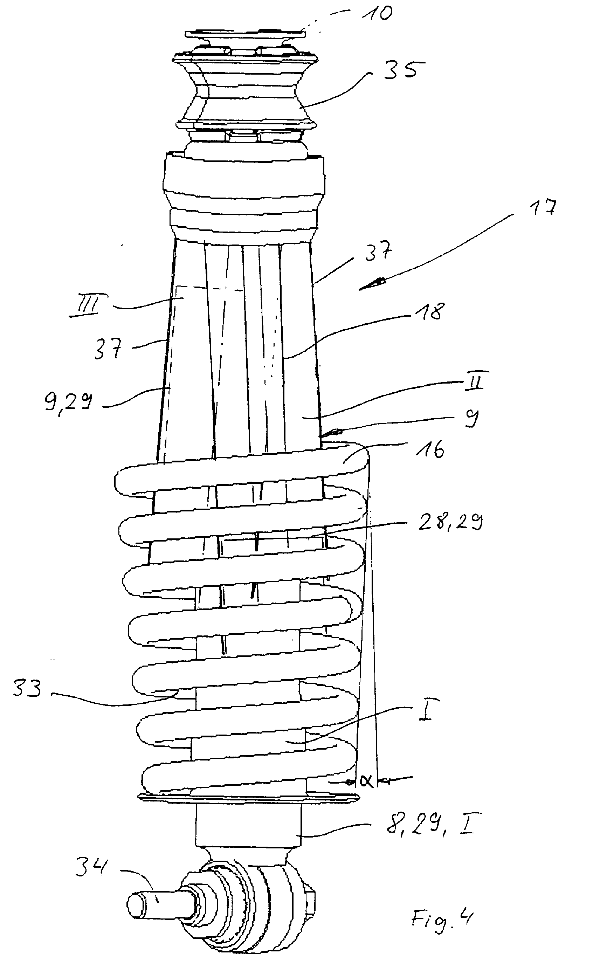

Die Fig. 4 zeigt eine Seitenansicht des Feder-Dämpfers 17 in der sich die Feder 16 in der neutralen Stellung I, d. h. im nichtausgefederten oder eingefederten Zustand, befindet. Das untere Ende 8 des Dämpferrohres 29 ist ebenfalls in der neutralen Stellung I eingezeichnet. In der oberen Hälfte der Fig. 4 ist der Stoßdämpfer 9 sowohl in der ausgefederten Stellung II als auch in der eingefederten Stellung III jeweils mit dem Schutzrohr 37 ohne die Darstellung der entsprechenden Lage der Feder 16 dargestellt. Aus der Fig. 4 geht ferner der Winkel α hervor, mit dem die Feder 16 im Vergleich zu einem zylindrischen Querschnitt abgeschrägt ist.

## Patentansprüche

1. Einzelradaufhängung für nichtgelenkte Räder eines Kraftfahrzeuges, mit einem Feder-Dämpfer, wobei der Dämpfer ein Gehäuse und eine darin geführte Kolbenstange aufweist, derart, dass ein unteres Ende (8) des Stoßdämpfers (9, 29) an einem Lenker (5) angelenkt ist, dass ein oberes Ende (10) des Feder-Dämpfers (17) an einer Karosserie (13) oder dergleichen des Kraftfahrzeuges (1) über ein Gelenk (35) schwenkbar befestigt ist, dass sich an dem unteren Ende (8) des Stoßdämpfers (9) ein unteres Ende (21) der Feder (16) abstützt und dass ein oberes Ende (23) der Feder (16) über den Stützring (25, 26) fest an der Karosserie (13) oder dergleichen angeordnet ist,
und wobei sich die Größe und Form einer Durchgangsöffnung (33) der Feder (16) aus dem Bauraumbedarf des Feder-Dämpfers (17) beim Aus-und Einfedern ergibt und die Außenform und Größe der Feder (16) mit einem Sicherheitsabstand (t) zu den Bauteilen sowie den Lenkern (4, 5, 7) der Einzelradaufhängung (2) angepasst ist,
**dadurch gekennzeichnet, dass** die Durchgangsöffnung (33) der Feder (16) eine ovale oder elliptische Form aufweist und der Feder-Dämpfer (17) solchermaßen angeordnet ist, dass dessen Hauptschwenkrichtung im wesentlichen in Richtung der großen Halbachse der Durchgangsöffnung (33) sowie ungefähr parallel zu den in unmittelbarer Nähe befindlichen Bauteilen (4, 5) der Einzelradaufhängung (2) oder einer Abtriebswelle (7) verläuft.

2. Einzelradaufhängung nach Anspruch 1,
**dadurch gekennzeichnet, daß** die Feder (16) in ihrer Längsrichtung konus-oder kegelförmig ausgebildet ist.

3. Einzelradaufhängung nach Anspruch 2,
**dadurch gekennzeichnet, daß** die Feder (16) mit ihrem kleineren Querschnitt am unteren Ende (8) des Stoßdämpfers (9, 29) angeordnet ist.

4. Einzelradaufhängung nach einem der vorhergehenden Ansprüche,
**dadurch gekennzeichnet, daß** sich ein gleichmäßiges Verbiegen der Feder (16) sowohl in Richtung der Hauptschwenkbewegung des Feder-Dämpfers (17) als auch senkrecht zu dieser Hauptschwenkbewegung durch eine entsprechende Anpassung der Größe und Form des Querschnittes des Federdrahtes und/oder durch eine sich der gewünschten Verformung angepaßte Steigung der Feder (16) ergibt.

## Claims

1. An independent wheel suspension for non-steered wheels of a motor vehicle, comprising a spring shock absorber, wherein the shock absorber has a housing and a piston rod guided therein in such a way that a lower end (8) of the shock absorber (9, 29) is articulated to a suspension link (5), in that an upper end (10) of the spring shock absorber (17) is pivotably fastened to a body (13) or the like of the motor vehicle (1) by means of an articulated joint (35) in that a lower end (21) of the spring (16) is supported at the lower end (8) of the shock absorber (9) and in that an upper end (23) of the spring (16) is rigidly arranged on the body (13) or the like by means of the support ring (25, 26), and wherein the size and shape of a through-opening (33) of the spring (16) is produced from the installation space requirement of the spring shock absorber (17) during the rebound and compression movement and the outer shape and size of the spring (16) is adapted with a safety spacing (t) with respect to the components and the suspension links (4, 5, 7) of the independent wheel suspension (2), **characterised in that** the through-opening (33) of the spring (16) has an oval or an elliptical shape and the spring shock absorber (17) is arranged in such a way that the main pivoting direction thereof substantially runs in the direction of the semi-major axis of the through-opening (33) and approximately parallel to the components (4, 5) of the independent wheel suspension (2) or a drive shaft (7) located in the direct vicinity.

2. An independent wheel suspension according to claim 1, **characterised in that** the spring (16) is cone-shaped or conical in its longitudinal direction.

3. An independent wheel suspension according to claim 2, **characterised in that** the spring (16) is arranged with its smaller cross-section at the lower end (8) of the shock absorber (9, 29).

4. An independent wheel suspension according to any one of the preceding claims, **characterised in that** a uniform bending of the spring (16) is produced both in the direction of the main pivoting movement of the spring shock absorber (17) and also perpendicularly to this main pivoting movement by a corresponding adaptation of the size and shape of the cross-section of the spring wire and/or by a pitch of the spring (16) adapted to the desired deformation.

## Revendications

1. Suspension de roue indépendante pour des roues non directrices d'un véhicule automobile, comportant un ressort-amortisseur, selon lequel
l'amortisseur comporte un boîtier dans lequel est guidée une tige de piston de façon qu'une extrémité inférieure (8) de l'amortisseur (9, 29) soit articulée à un bras (5), que l'extrémité supérieure (10) du ressort-amortisseur (17) soit fixée de manière pivotante à la carrosserie (13) ou un moyen analogue du véhicule automobile (1) par une articulation (35), que l'extrémité inférieure (8) de l'amortisseur (9) s'appuie sur l'extrémité inférieure (21) du ressort (16) et l'extrémité supérieure (23) du ressort (16) est montée solidairement sur la carrosserie (13) ou un moyen analogue par des bagues d'appui (25, 26),
et selon lequel la dimension et la forme d'un passage traversant (33) du ressort (16) résultent de l'encombrement de l'amortisseur-ressort (17) lors du mouvement de suspension rentrant et sortant et la forme extérieure et la dimension du ressort (16) est adaptée avec un intervalle de sécurité (t) par rapport au composant ainsi qu'au bras (4, 5, 7) de la suspension de roue indépendante,
**caractérisé en ce que**
l'orifice traversant (33) du ressort (16) a une forme ovale ou elliptique et le ressort amortisseur (17) est installé de façon que sa direction principale de pivotement soit pratiquement dans la direction du grand demi-axe de l'orifice traversant (33) et sensiblement parallèle aux pièces (4, 5) de la suspension de roue indépendante (2) ou de l'arbre de sortie (7) qui se trouve au voisinage immédiat.

2. Suspension de roue indépendante selon la revendication 1,
**caractérisée en ce que**
le ressort (16) a une forme conique ou tronconique dans sa direction longitudinale.

3. Suspension de roue indépendante selon la revendication 2,
**caractérisée en ce que**
le ressort (16) est installé par sa section la plus petite à l'extrémité inférieure (8) de l'amortisseur (9, 29).

4. Suspension de roue indépendante selon l'une des revendications précédentes,
**caractérisée en ce qu'**
le ressort (16) a une flexion régulière à la fois dans la direction du mouvement de pivotement principal du ressort-amortisseur (17) et aussi perpendiculairement à ce mouvement de pivotement principal par une adaptation correspondante des dimensions et de la forme de la section du fil du ressort et/ou par une pente du ressort adaptée à la déformation souhaitée.
